(19)

Europäisches
Patentamt

European
Patent Office

Office européen
des brevets

(11) **EP 3 975 062 A1**

(12) **EUROPEAN PATENT APPLICATION**

(43) Date of publication:
**30.03.2022 Bulletin 2022/13**

(21) Application number: **20198215.4**

(22) Date of filing: **24.09.2020**

(51) International Patent Classification (IPC):
*G06N 3/08 (2006.01)*

(52) Cooperative Patent Classification (CPC):
**G06N 3/08**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **TOYOTA JIDOSHA KABUSHIKI
KAISHA
Toyota-shi, Aichi-ken, 471-8571 (JP)**

(72) Inventors:
• **AL JUNDI, Rahaf
  1140 BRUSSELS (BE)**
• **CHUMERIN, Nikolay
  1140 BRUSSELS (BE)**
• **OLMEDA REINO, Daniel
  1140 BRUSSELS (BE)**

(74) Representative: **Cabinet Beau de Loménie
158, rue de l'Université
75340 Paris Cedex 07 (FR)**

(54) **METHOD AND SYSTEM FOR SELECTING DATA TO TRAIN A MODEL**

(57)    A method for selecting data to train a model, said model being parameterized by weights and represented by a classification function F mapping at least one datum to at least one class. Said method comprises the steps of:

- training (F10) the model using a first dataset (E1), so as to obtain a first set ($\Theta 1$) of weight values optimising a function L evaluating the performance of the function F, and, for each datum ($x\_i$) of a second dataset (E2) comprising unlabelled data,
- determining (F20) at least one pseudo-label ($y\_i\_j$) of said datum using said function F,
- determining (F30), using said function L and said first set of weight values, a value ($S\_i$) referred to as "criterion value" evaluating, for a third dataset (E3), a classification error of the labels estimated on the third dataset when said at least one pseudo-label determined for said datum of the second dataset is assumed to be true.

Said method further comprises a step of selecting (F40), from said second dataset, a given number K of data whose respectively associated criterion values satisfy a given selection condition.

Training a model using dataset E1 — F10

Determining at least one pseudo-label $y\_i\_j$ of a data $x\_i \in E2$ — F20

x_i, i++

Determining a criterion value $S\_i$ of the data $x\_i$ with dataset E3 — F30

Selecting K data from dataset E2 — F40

FIG.4

EP 3 975 062 A1

**Description**

Field of the disclosure

The present invention relates to the general field of data processing for automatic (machine) learning. It relates more particularly to a method for selecting data to train a model. The invention also relates to a method for training a model using the selected data.

Description of the Related Art

Neural networks have now become one of the most widely used approach in various fields of research (autonomous driving, computer vision, medical image analysis, natural language processing, etc.) to enable new technological developments.

This tremendous success is largely due to a combination of various factors, including ever deeper networks, ever larger datasets with labelled (e.g. annotated) data used for training or inference, and ever more powerful computing resources (processing units) to manage such an amount of data. In this way, neural networks have gradually turned into deep networks trained on millions of data so that they can exceed human level performance in certain tasks.

However, obtaining annotations for new data can be a time consuming and a very expensive procedure. Besides, in many applications, e.g. classification or semantic segmentation, data are not equally important for the task being learned. Many data can be redundant or easily predicted and labelling them can be a waste of resources.

Thus, with the goal of improving the data labelling efficiency, so-called active learning methods have been proposed. Active learning is a sub-field of machine learning that aims at identifying the most informative data points in a large pool of unlabelled data. Those identified unlabelled data are then sent for annotation and added to the existing training dataset. Proceeding in this way contributes to a substantial performance gain upon retraining, especially as this process can be repeated until reaching a certain level of performance or consuming the annotation budget.

While a large body of research has been dedicated to active learning, fewer research works have considered active learning with deep models. Among the latter, the direction that is considered the most promising so far concerns neural network based methods for selecting candidates among unlabelled data, said methods relying on the uncertainty associated with the predictions of true potential labels for these data.

More precisely, such active learning methods aim at identifying informative data (i.e. identifying among unlabelled data those for which a label is incorrectly predicted by the current trained neural network). Indeed, it is conventionally considered that data for which a label is incorrectly predicted contains more relevant information for further neural network training than data for which the true label can be predicted. Here, identification of data with said incorrectly predicted labels rely on the uncertainty attached to the predictive capacity of the neural network, as described, for example, in the document: "Dropout as a Bayesian approximation: Representing model uncertainty in deep learning, Y. Gal, Z. Ghahramani, international conference on machine learning, pages 1050-1059, 2016".

However, there are drawbacks to these methods relying on the uncertainty. Indeed, they require to train a Bayesian neural network, or at least to train a network with dropout, for example "MC-dropout" (acronym of the expression "Monte Carlo-dropout"). Proceeding in this way might not always be applicable, and can be particularly complicated to implement, as well as costly in terms of computing resources if re-training of the neural network is mandatory once data have been identified.

Use of such methods may also be considered non-optimal to the extent that the neural network can be uncertain about the true label of a data and yet predicts it correctly. It is therefore difficult to take advantage of the fact that some data contain information that is more relevant.

Furthermore, it should be noted that active learning methods have been mostly developed to provide good performance when the pool of unannotated data is artificially balanced over the different classes to which the data can belong, as in the case of most standard datasets. However, such an assumption is unrealistic in many cases since real life applications often face the problem of imbalanced datasets.

Summary of the disclosure

The purpose of the present invention is to overcome all or some of the limitations of the prior art solutions, particularly those outlined here above, by providing a solution that enables active learning (e.g. identification of unlabelled data containing relevant information with regard to the task associated with a neural network) in a more efficient and simpler way than solutions of the prior art, and with excellent performance results.

Moreover, this solution provides excellent performance in cases where the distribution of data among several classes is unbalanced.

To this end, and according to a first aspect, the invention relates to a method for selecting data to train a model, said model being parameterized by weights and represented by a classification function F mapping at least one datum to at least one class. Said method comprises the steps of:

- training the model using a first dataset comprising class labelled data, so as to obtain a first set of weight values optimising a function L evaluating the performance of the function F,
  and, for each datum of a second dataset comprising unlabelled data,
- determining at least one pseudo-label of said datum using said function F parameterized by said first set of weight values,
- determining, using said function L and said first set of weight values, a value referred to as "criterion value" evaluating, for a third dataset distinct from said first and second datasets and comprising labelled data, a classification error estimated on the third dataset when said at least one pseudo-label determined for said datum of the second dataset is assumed to be true.

Said method further comprises a step of selecting, from said second dataset, a given number K of data whose respectively associated criterion values satisfy a given selection condition.

In its general principle, the selection method according to the invention is based on the following reasoning: when the entropy (which may be viewed as a measure for uncertainty) associated with label predictions is minimized, it usually pushes the predictions obtained with function F towards the most probable label and suppresses other labels probabilities. If it is assumed that a predicted label obtained with function F is correct, then maximizing the confidence in this prediction (for example through maximizing the log-likelihood of said predicted label or alternatively through minimizing the cross-entropy loss) could help improving the performance of the function F. However, if said predicted label is wrong, then maximizing the confidence in this prediction could harm said performance as false information is injected in the model.

Hence, according to the invention, this reasoning is used as a base for designing a measure, i.e. the criterion value, to select data for which label(s) are wrongly predicted. Such a criterion value is determined by means of the L function which, as known from the prior art, corresponds to a loss function.

Instead of the conventional reliance on model uncertainty as a proxy to leverage new unknown labels, the selection method according to the invention proposes a simple and efficient data selection that moves beyond uncertainty.

More particularly, by first accepting the model prediction and then judging its effect on the model classification error (e.g. the classification error of the model evaluated on said third dataset), wrongly predicted data can be better identified among the data of said second dataset.

The selection method according to the invention is furthermore particularly advantageous insofar as it enables active learning independently of the nature of the model considered (i.e. the selection method is agnostic), and requires no changes on the latter when it comes to re-training it with the data that have been identified and selected.

Finally, the selection method according to the invention shows excellent performance results on more realistic scenario of imbalanced datasets.

In particular embodiments, the selection method may furthermore include one or more of the following features, taken alone or in any technically feasible combination.

According to an embodiment, said method further comprises, for each datum of the second dataset, a step of determining a second set of weight values optimizing the function L parameterized by said datum and said at least one pseudo-label determined for said datum, the criterion value being equal to the difference between:

- a first term being equal to the function L parameterized by the first set of weight values and evaluated on the third dataset, and
- a second term being equal to the function L parameterized by the second set of weight values and evaluated on the third dataset, the selection condition being satisfied if the criterion values of the K selected data are the largest among the criterion values of the data belonging to said second dataset.

Calculating the criterion value in this way is particularly suitable in case the size of the third dataset is reduced. Indeed, in this case, the loss associated to said third dataset can be estimated in a fast way, without a large amount of computing resources being required.

According to an embodiment, the criterion value is equal to the negative scalar product between:

- a first term being equal to the gradient with respect to the model weights of the function L evaluated on said third dataset, said gradient being evaluated on said first set of weight values,
- a second term being equal to the gradient with respect to the model weights of the function L evaluated on said datum of the second dataset and said at least one pseudo-label determined for said datum, said gradient being evaluated on said first set of weight values,

the selection condition being satisfied if the criterion values of said K selected data are the largest among the criterion values of the data belonging to said second dataset.

Calculating the criterion value in this way is particularly advantageous since it does not require the determination of the second set of weight values as well as the computation of the third dataset loss for each datum of the second dataset. Consequently, said embodiment enables to account for scenarios with extreme constraints on computational costs.

According to an embodiment, said function L is the cross-entropy loss function, the optimization of function L for the determination of a set of weight values corresponding to a minimization.

According to an embodiment, said function L is the log-likelihood function, the optimization of function L for the determination of a set of weight values corresponding to a maximization.

According to an embodiment, each datum of said second dataset is associated with a class, a plurality of classes being considered and at least two of said classes being of distinct cardinal numbers.

Such an embodiment refers to the case of imbalanced datasets.

According to an embodiment, the classification function F is used for a classification task or a segmentation task.

According to a second aspect, the invention also relates to a method for training a model parameterized by weights and represented by a classification function F mapping at least one datum to at least one class, said method comprising the steps of:

- selecting data according to the invention,
- associating at least one label to each of the K data selected from the second dataset,
- updating the first dataset by adding said K labelled data to said first dataset,
- training the model using the first updated dataset.

The training method according to the invention inherits the advantages presented above for the selection method.

In particular embodiments, the training method may furthermore include one or more of the following features, taken alone or in any technically feasible combination.

According to an embodiment, said selection, association, updating and training steps of said training method are iterated.

According to an embodiment, iterations are carried out as long as a performance measure of the model remains below a given threshold or as long as data of the second dataset remains unlabelled.

According to a third aspect, the invention also relates to a computer program including instructions for executing a selection method according to the invention or a training method according to the invention when said program is executed by a computer.

This program can use any programming language and take the form of source code, object code or a code intermediate between source code and object code, such as a partially compiled form, or any other desirable form.

According to a fourth aspect, the invention also relates to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a fifth aspect, the invention also relates to a system for selecting data to train a model, said model being parameterized by weights and represented by a classification function F mapping at least one datum to at least one class. Said selection system comprises:

- a training module, configured to train the model using a first dataset comprising class labelled data, so as to obtain a first set of weight values optimising a function L evaluating the performance of the function F,
- a first determination module, configured to determine, for each datum of a second dataset comprising unlabelled data, at least one pseudo-label of said datum using said function F parameterized by said first set of weight values,
- a second determination module, configured to determine, for each datum of the second dataset and using said function L and said first set of weight values, a value referred to as "criterion value" evaluating, for a third dataset distinct from said first and second datasets and comprising labelled data, a classification error evaluated on the third dataset when said at least one pseudo-label determined for said datum of the second dataset is assumed to be true,
- a selection module, configured to select, from said second dataset, a given number K of data whose respectively associated criterion values satisfy a given selection condition.

According to a sixth aspect, the invention also relates to a system for training a model, said model being parameterized by weights and represented by a classification function F mapping at least one datum to at least one class. Said training system comprises:

- a selection system according to the invention,
- an association module, configured to associate at least one label to each of the K data selected from the second dataset,
- an updating module, configured to update the first dataset by adding said K labelled data to said first dataset,
- a training module, configured to train the model using the first updated dataset.

Brief description of the drawings

How the present disclosure may be put into effect will now be described by way of example with reference to the appended drawings, in which:

- Figure 1 illustrates a particular embodiment of a selection system according to the invention,
- Figure 2 illustrates an example of the hardware architecture of said selection system,
- Figure 3 illustrates, according to a simplified example, the general principle on which the selection method according to the invention is based,
- Figure 4 is a flowchart of the main steps of a selection method according to the invention,
- Figure 5 illustrates a first particular embodiment of the selection method of figure 4,
- Figure 6 illustrates a second particular embodiment of the selection method of figure 4,
- Figure 7 is a flowchart of a particular embodiment of a training method according to the invention,
- Figure 8 is a set of graphs illustrating performance results of a neural network trained according to the invention with balanced datasets for image classification,
- Figure 9 is a set of graphs illustrating performance results obtained by a neural network trained according to the invention with imbalanced datasets for image classification,
- Figure 10 is a table reporting the accuracy of the selection method according to the invention,
- Figure 11 is a graph illustrating performance results of a neural network trained according to the invention for semantic segmentation.

Description of the embodiments

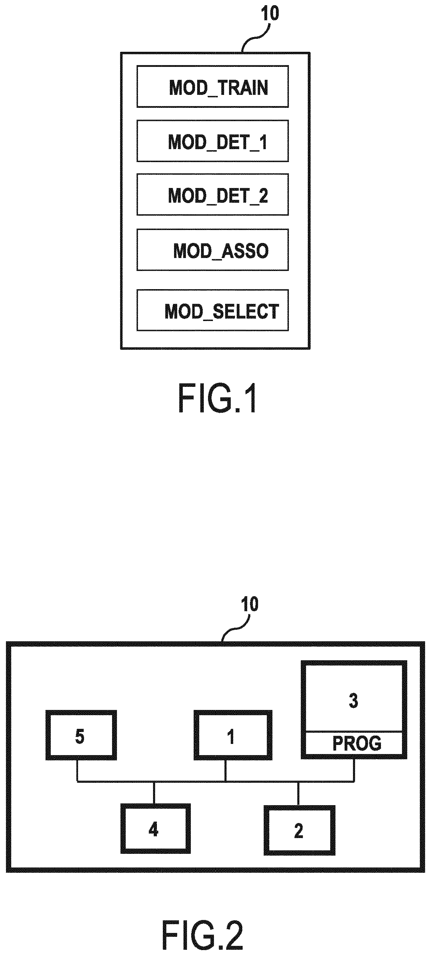

Figure 1 illustrates a particular embodiment of a system 10 configured to select data and referred as "selection system" hereafter. Said data are intended for the training of a model.

The rest of the description is aimed more specifically at a model trained and learned by means of a neural network. It should be noted, however, that no limitation is attached to the learning technique used for the model, and therefore any learning technique implementing machine learning can be considered in the sense of the invention (e.g. Support Vector Machines, Decision Trees, K-Nearest Neighbors, etc.). To put it another way, the selection system (and therefore a fortiori the selection method implemented by this system, as described in more detail below) is agnostic with respect to the learning technique under consideration.

In a conventional way, the neural network has a structure in the form of a stack of layers. For example, a layer can be a fully connected layer, a convolutional layer, etc.

Each layer comprises a weight tensor enabling output data to be associated with data provided as inputs to said layer. In this way, said neural network is parameterized by weights (the set of all neural network weights is thereafter noted $\Theta$), so that said neural network is configured to learn a function F referred to as "classification function". In other words, the model learned thanks to the neural network is represented by said F classification function. All these aspects are well known to man skilled in the art and therefore not described in detail here.

Said classification function F is configured to map at least one datum provided as an input for said neural network to at least one class (said class being associated to a label). For example, the classification function F is used for a classification task (binary classification, multiclass classification, etc.) or for a segmentation task (semantic segmentation, etc.). It is of course possible to envisage other tasks for the classification function (object detection, reinforcement learning, etc.).

The way in which a label is associated to a datum by means of function F depends of course on the neural network weights, i.e. on the values of these weights. Therefore, and for the rest of the description, one adopts the notation according to which $F = F(x, \Theta)$. This symbolic notation covers not only the case where x is a datum belonging to a dataset, but also the case where x is the dataset itself. More particularly, when x is a dataset, it is understood that $F(x, \Theta)$ represents the set of labels respectively associated with the data of said set x.

It should be noted that the invention remains applicable whatever the nature of the neural network considered (convolutional, perceptron, autoencoder, recurrent, etc.), in particular for any deep neural network.

It also should be noted that no limitation is attached to the kind of data that may be processed by the neural network. In the same way, no limitation is attached to the kind of score or classification that may be output based on the input and through function F.

For example, if the inputs to the neural network are images or features that have been extracted from images, the output generated by the neural network for a given image may be scores for each of a set of object classes (e.g. categories), with each score representing an estimated likelihood that the image contains an image of an object belonging to the class.

According to another example, if the inputs to the neural network are Internet resources (e.g., web pages), documents, or portions of documents or features extracted from Internet resources, the output generated by the neural network for a given Internet resource, document, or portion of a document may be a score for each of a set of topics, with each score representing an estimated likelihood that the Internet resource, document, or document portion is about the topic.

According to another example, if the inputs to the neural network are features of an impression context for a particular advertisement, the output generated by the neural network may be a score that represents an estimated likelihood that the particular advertisement will be clicked on.

According to another example, if the inputs to the neural network are features of a personalized recommendation for a user, e.g., features characterizing the context for the recommendation, e.g., features characterizing previous actions taken by the user, the output generated by the neural network may be a score for each of a set of content items, with each score representing an estimated likelihood that the user will respond favourably to being recommended the content item.

According to another example, if the input to the neural network is text in one language, the output generated by the neural network may be a score for each of a set of pieces of text in another language, with each score representing an estimated likelihood that the piece of text in the other language is a proper translation of the input text into the other language.

According to another example, if the input to the neural network is a spoken utterance, a sequence of spoken utterances, or features derived from one of the two, the output generated by the neural network may be a score for each of a set of pieces of text, each score representing an estimated likelihood that the piece of text is the correct transcript for the utterance or sequence of utterances.

The selection system 10 is configured to carry out processes aimed at selecting unlabelled data whose content is particularly relevant to neural network training (so that the model can be trained), by implementing a method for selecting data.

Figure 2 illustrates an example of the hardware architecture of the selection system 10 for the implementation of the selection method according to the invention.

To this end, the selection system 10 has the hardware architecture of a computer. As shown in Figure 2, the selection system 10 comprises, in particular, a processor 1, a random access memory 2, a read-only memory 3, a non-volatile memory 4 and communication means 5.

The read-only memory 3 of the selection system 10 constitutes a recording medium conforming to the invention, which is readable by processor 1 and on which is recorded a computer program PROG conforming to the invention, containing instructions for carrying out the steps of the selection method according to the invention. The program PROG defines functional modules of the selection system 10, which are based on or control the aforementioned elements 1 to 5 of the selection system 10, and which comprise in particular:

- a training module MOD_TRAIN, configured to train the neural network using a first dataset E1 comprising class labelled data, so as to obtain a first set 01 of weight values optimising a function L evaluating the performance of the function F,
- a first determination module MOD_DET_1, configured to determine, for each datum $x\_i$ (i being an integer index) of a second dataset E2 comprising unlabelled data, at least one pseudo-label $y\_i\_j$ (j being an integer index) of said data using said function F parameterized by said first set 01 of weight values,
- a second determination module MOD_DET_2, configured to determine, for each datum $x\_i$ of the second dataset E2 and using said function L and said first set 01 of weight values, a value $S\_i$ referred to as "criterion value". Said value $S\_i$ enables to evaluate, for a third dataset E3 distinct from said first and second datasets E1, E2 and comprising labelled data, a classification error estimated on the third dataset E3 when said at least one pseudo-label $y\_i\_j$ determined for said datum $x\_i$ of the second dataset E2 is assumed to be true,
- a selection module MOD_SELECT, configured to select, from said second dataset E2, a given number K of data whose respectively associated criterion values satisfy a given selection condition (K being greater than or equal to 1).

The functionalities attached to each of the functional modules are explained in detail later on when describing modes of implementation of said selection method.

In the present embodiment, it is considered that the selection system 10 takes the form of a single computer comprising all the functional modules mentioned above.

However, nothing excludes the possibility of considering that the selection system 10 comprises a plurality of computers configured in a similar manner to said single computer, said functional modules being distributed between the computers of said plurality of computers (in which case, the PROG program comprises a plurality of sub-programs also distributed between said computers of said plurality of computers).

Moreover, in the present embodiment, it is also considered that the neural network (i.e. the code instructions defining said neural network) is previously stored in a memory of the selection system 10, such as the non-volatile memory 4.

In an alternative embodiment, said neural network is initially stored in a memory equipping an entity external to the selection system 10 (e.g.: database server). Therefore, in this alternative embodiment, the selection system 10 also includes an obtaining module (not illustrated on figure 1) integrated to the communication means 5 and configured to obtain said neural network. In other words, said neural network (i.e. the code instructions defining said convolutional neural network) is obtained via a data exchange (transmission/reception) controlled by the obtaining module and carried out by the communication means 5 of said selection system 10 as well as by communication means suitable for transmission equipping said external entity.

Such an exchange of data between the obtaining module and said external entity is carried out via a communication interface. No limitation is attached to the nature of this communication interface, which may be wired or non-wired, and may implement any protocol known to the man skilled in the art (Ethernet, Wi-Fi, Bluetooth, 3G, 4G, 5G, etc.).

More generally, no limitation is attached to the way in which the neural network is obtained by the selection system 10.

It should be noted that considering datasets such as E1 and E2 is in line with active learning methods. Indeed, while standard supervised machine learning methods have access to all available training data for a given task (classification, segmentation, etc.) before the start of a learning process, active learning methods assume access to an initial dataset of labelled training data (dataset E1 here) along with another dataset of unlabelled data (dataset E2 here) often referred as "a pool".

No limitation is attached to the number of classes that can be associated with the second E2 dataset, or even to the distribution of data within these classes. For example, a plurality of classes is considered, and either all the classes are of the same cardinal number (i.e. it refers to the case of a "balanced setting"), either at least two of said classes are of distinct cardinal numbers (i.e. it refers to the case of an "imbalanced setting").

Furthermore, when it comes to machine learning, other datasets may also be considered. In this way, said dataset E3 corresponds to a holdout set as for it. Such dataset E3 is typically used to evaluate the generalization error associated with the resulting model, i.e. the classification function F learned once the neural network has been trained. For example, said dataset E3 is equal to all or part of a validation dataset used for setting hyper-parameters and estimating the model performance. However, nothing excludes the possibility that the dataset E3 is strictly different from the validation data set.

As is well known to the man skilled in the art, there are multiple ways to evaluate the performance of the classification function F (e.g. to measure the classification performance of the function F) intended to be learned through neural network training. By "to evaluate the performance of the classification function F", reference is made here to the evaluation of the entropy associated with the label predictions obtained with said function F. Said entropy is usually used as a measure of uncertainty.

By way of example, said function L is configured to evaluate the performance of the function F is the cross-entropy loss function. According to another example, said function L is the log-likelihood function. Nothing excludes the possibility of considering still other functions, such as a "MSE" function (acronym for "Mean Square Error"), a Hinge loss function, etc.

In its general principle, the selection method according to the invention is based on the following reasoning: when the entropy associated with the label predictions is minimized, it usually pushes the predictions obtained with function F towards the most probable label and suppresses other labels probabilities. If it is assumed that a predicted label obtained with function F is correct, then maximizing the confidence in this prediction (for example through maximizing the log-likelihood of said predicted label or alternatively through minimizing the cross-entropy loss) could help improving the performance of the function F. However, if the said predicted label is wrong, then maximizing the confidence in this prediction could harm said performance as false information is injected in the model. Hence, according to the invention, this reasoning is used as a base for designing a measure to select data for which label(s) are wrongly predicted.

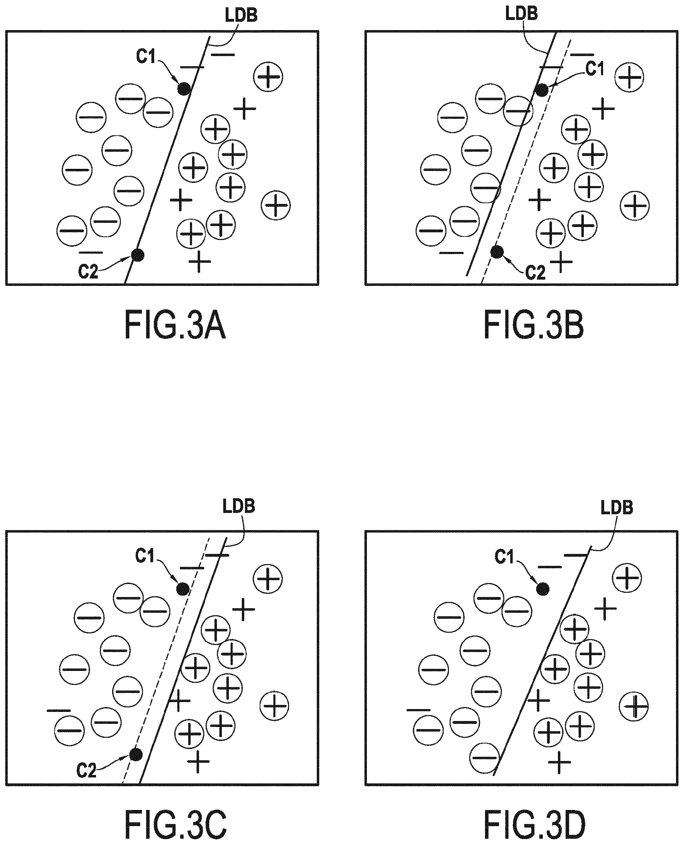

Figure 3 illustrates, according to a simplified example, the general principle on which the selection method according to the invention is based.

Said Figure 3 comprises four sub-figures (3a), (3b), (3c) and (3d). The sub-figure (3a) shows:

- the first dataset E1 (data with label positive "+" or negative "-" and surrounded by a circle),
- a validation set used here as the holdout set E3 (data with label "+" or "-" and not surrounded by a circle),
- some data, still referred as "pool samples", of the second dataset E2 (circles C1 and C2 filled in black),
- a current learned decision boundary LDB.

The two pool samples (with negative true labels) are uncertain since they are located very near from the boundary LDB. Moreover, pool sample C1 is correctly predicted and pool sample C2 is wrongly predicted at that point.

The sub-figure (3b) shows how the boundary LDB would move if training steps are performed with the prediction of pool sample C2 considered as a true label (the position of the boundary after moving is indicated by a plain line, the former position being indicated by a dotted line). As shown in sub-figure (3b), two data D1, D2 of the dataset E3 whose true label are negative are now both on the wrong side of the decision boundary LDB whereas one of them was correctly predicted before said training steps (see sub-figure (3a)). Otherwise said, considering that pool sample C2 is associated with a true label would harm the prediction performance of the function F.

The sub-figure (3c) illustrates the effect of performing training steps when the correctly predicted output of the pool sample C1 is utilized instead of the wrongly predicted one of the pool sample C2. As shown in sub-figure (3c), the decision boundary LDB would move in an opposite direction to that shown in the sub-figure (3b). Therefore, data D1, D2 are now both on the right side of the decision boundary LDB.

Consequently, in the example of figure 3, the selection method according to the invention is implemented so as to select the pool sample C2 for labelling in order to obtain its correct label.

Finally, the sub-figure (3d) shows the position of the decision boundary LDB after adding the newly labelled pool sample C2 to the training dataset E1.

For the rest of the description, and for the sake of simplicity, it is now considered in a non-limiting way that function F associates a single label to each data provided as input to said function F. The elements described hereafter are nevertheless easily generalizable for the man skilled in the art in case a plurality of labels are associated with a data provided as input to said function F.

Furthermore, it is also considered for the rest of the description, and in a non-limiting way, that function L is the cross-entropy loss. Consequently, optimizing said function L finally means minimizing the latter. It should be noted that if it were considered that function L is the log-likelihood function, then said optimization would in this case correspond to a maximization.

Finally, the following notations are also introduced: the set of labels associated with the data of said first dataset E1 (respectively with said third dataset E3) is noted LAB(E1) (respectively LAB(E3)).

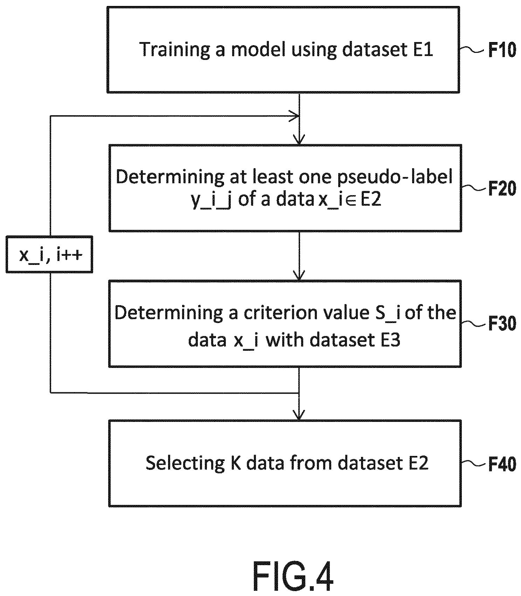

Figure 4 is a flowchart of the main steps of the selection method according to the invention, these steps being carried out by the selection system 10.

As shown in Figure 4, the selection method comprises a step F10 of training the neural network using the first dataset E1, so as to obtain the first set 01 of weight values optimising the function L. This selection step F10 is performed by the training module MOD_TRAIN of the selection system 10.

Thus, during the implementation of said F10 step, the neural network is trained from the dataset E1, which at that time contains only labelled data. Such a training procedure is well known to the skilled in the art, and the way it is implemented is therefore not described in detail here.

The implementation of this step F10 can be mathematically written as follows:

$$\Theta1 = \arg \min_{\Theta} L(F(E1, \Theta), LAB(E1))$$

Thus, once step F10 has been performed, the neural network is trained for the first time, and values have been assigned to the weights of this network.

The selection method also comprises a set of steps that are carried out (i.e. iterated) for each datum $x\_i$ of the second dataset E2.

As shown in Figure 3, said set of steps comprises, for a given datum $x\_i$ of the second data set E2, a step F20 of determining a pseudo-label $y\_i\_j$ of said datum $x\_i$ using said function F parameterized by said first set 01 of weight values. This determination step F20 is performed by the first determination module MOD_DET_1 of the selection system 10.

As mentioned above, it is now considered that function F associates a single label to each data provided as input to said function F. Therefore, a single index j is associated with index i.

It should be observed that said pseudo-label $y\_i\_j$ is not yet definitively associated with datum $x\_i$. By "definitively associated", on refers here to the fact that datum $x\_i$ has not yet been selected in accordance with the invention and as further described below.

The implementation of this step F20 can be mathematically written as follows:

$$y\_i\_j = F(x\_i, \mathit{\Theta}1)$$

Said set of steps also comprises, for said datum x_i, a step F30 of determining, using said function L and said first set 01 of weight values, the criterion value S_i evaluating, for the third dataset E3, a classification error of the labels estimated on the third dataset E3 when said pseudo-label y_i_j is assumed to be true. This determination step F30 is performed by the second determination module MOD_DET_2 of the selection system 10.

Thus, the determination step F30 proposes to estimate the change in the model classification error (i.e. the model generalization error) on unseen samples, namely the data of said dataset E3.

Once steps F20 to F30 have been performed for all data in the second dataset E2, the selection method further comprises a step F40 of selecting, from said second dataset E2, a number K of data whose respectively associated criterion values satisfy a given selection condition , K being greater than or equal to 1.

According to the invention, the selection condition allows for the selection of the data that most adversely affects the performance of the neural network when the pseudo-labels predicted for them at the end of step 20 are assumed to be true. Consequently, the fact of belonging or not to said K data constitutes a selection condition within the meaning of the invention.

By way of an example, and with reference to figure 3, a datum that would be selected corresponds to the pool sample C2.

No limitation is attached to the value of the number K, except of course that said number K must be less than the number of unlabelled data contained in dataset E2.

It should be noted that the K selected data are intended to be labelled with their respective true labels (i.e. labels that are not those that were originally proposed following the implementation of step F20) and then added to the dataset E1 so that the neural network can be re-trained. These aspects are described in more detail later.

In addition, it is also important to note that the form taken by the selection condition depends on how the criterion values are calculated.

Particular embodiments of the selection method are now described, in order to give examples of calculation of said criterion value S_i.

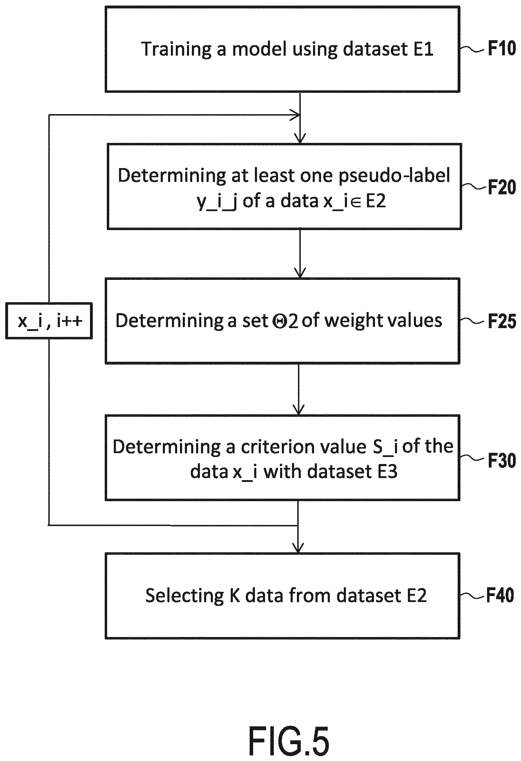

Figure 5 illustrates a first particular embodiment of the selection method of figure 4.

As shown in Figure 5, the selection method further comprises, for said datum x_i, a step F25 of determining a second set Θ2 of weight values optimizing (i.e. minimizing in this case since L is the cross-entropy loss) the function L parameterized by said datum x_i and said pseudo-label y_i_j. This determination step F25 is performed by a module (not illustrated on the figures) of the selection system 10 configured for that purpose.

The implementation of this step F25 can be mathematically written as follows:

$$\mathit{\Theta}2 = \arg \operatorname*{loc\,min}_{\mathit{\Theta},\mathit{\Theta}1} L(F(x\_i,\mathit{\Theta}), y\_i\_j)$$

where "loc min $_{\Theta,\Theta1}$" denotes the argument-result of the local minimization with respect to the neural network weights Θ starting from 01.

Otherwise said, the second set Θ2 is obtained through minimizing the loss L on the current sample x_i given the pseudo-label y_i_j.

According to said first particular embodiment, the criterion value S_i, as for it, is equal to the difference between:

- a first term being equal to the function L parameterized by by said first set 01 of weight values and evaluated on said third dataset E3, and
- a second term being equal to the evaluation of the function L parameterized by the second set Θ2 of weight values and evaluated on said third dataset E3.

Moreover, according to said first particular embodiment, the selection condition is satisfied if the criterion values of said K selected data are the largest among the criterion values of the data belonging to said second dataset E2.

The calculation of the criterion value S_i can be mathematically written as follows:

$$S\_i(x\_i) = L\big(F(E3,\mathit{\Theta}2), LAB(E3)\big) - L\big(F(E3,\mathit{\Theta}1), LAB(E3)\big)$$

Calculating the criterion value S_i according to such a formula is particularly suitable in case the size of the dataset E3 is reduced (for example ten data). Indeed, in this case, the loss associated to dataset E3 can be estimated in a fast way, without a large amount of computing resources being required.

It is important to note, however, that there is no limitation attached to the size of the dataset E3. Indeed, the inventors found that no significant differences could be seen among different sizes of the dataset E3 in terms of performance of the neural network once the latter has been re-trained using said K selected data (of course, lower accuracy is expected for lower size numbers, but the difference remains slight).

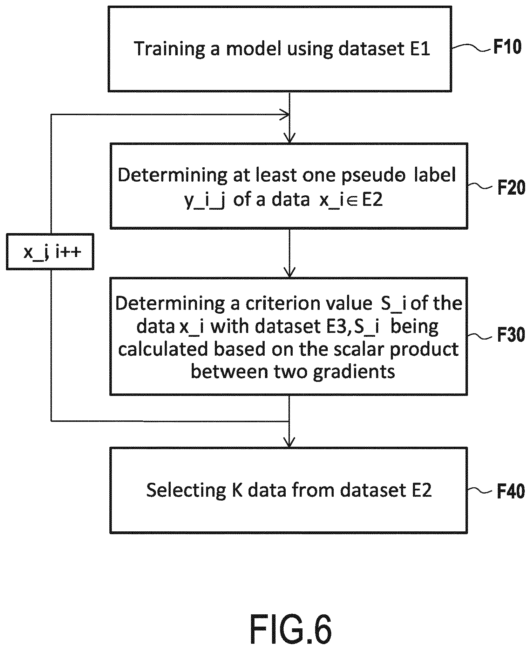

Figure 6 illustrates a second particular embodiment of the selection method of figure 4.

The implementation of this second embodiment is based on the fact that it is possible to provide an approximation of the formula previously given for the calculation of the criterion value S_i according to said first embodiment.

Indeed, if the following notation is introduced:

$$L\_E3(\varTheta) = L\big(F(E3, \varTheta), LAB(E3)\big) = \sum_k L(F(x\_k, \varTheta), y\_k)$$

where x_k is a datum belonging to said third dataset E3 and y_k is a label associated to said datum x_k, the formula previously given for S_i according to said first embodiment can be written:

$$S\_i(x\_i) = L\_E3(\varTheta2) - L\_E3(\varTheta1)$$

Now, it should be observed that the term L_E3(Θ2) may be expanded about θ1 using first order Taylor series approximation:

$$L\_E3(\varTheta2) = L\_E3(\varTheta1) + \nabla L\_E3(\varTheta1).(\varTheta2 - \varTheta1)$$

where VL_E3(θ1) denotes the gradient of L_E3(Θ) with respect to the parameter Θ at point Θ = θ1. It should also be observed that instead of doing a full optimization of the loss (as it is the case in said first embodiment with the determination of Θ2), the second set Θ2 can be estimated by a single step of gradient descent from θ1 with a learning rate $\eta$ and a loss estimated at datum x_i:

$$\varTheta2 = \varTheta1 - h\nabla L(F(x\_i, \varTheta1), y\_i\_j)$$

The learning rate $\eta$ is chosen equal to 1 since it has no influence on the order in which the data in dataset E2 can be sorted according to their respective criterion values, and therefore no influence on the K data that are to be selected at step F40.

This estimate of Θ2 can be injected in the estimate of L_E3(Θ2) given above, so as to obtain:

$$L\_E3(\varTheta2) = L\_E3(\varTheta1) + \nabla L\_E3(\varTheta1).\nabla L(F(x\_i, \varTheta1), y\_i\_j)$$

Ultimately, and as shown in Figure 6, the criterion value S_i is equal to the negative scalar product between:

- a first term being equal to the gradient with respect to the neural network weights Θ of the function L evaluated on said third dataset E3, said gradient being evaluated on said first set θ1 of weight values,
- a second term being equal to the gradient with respect to the neural network weights of the function L evaluated on said datum x_i of the second dataset E2 and said at least one pseudo-label y_i_j determined for said datum, said gradient being evaluated for said first set θ1 of weight values.

Moreover, according to said first particular embodiment, the selection condition is satisfied if the criterion values of said K selected data are the largest among the criterion values of the data belonging to said second dataset E2.

Otherwise said, according to said second embodiment, the calculation of the criterion value S_i can be mathematically written as follows:

$$S\_i(x\_i) = -\nabla L\_E3(\theta 1).\nabla L(F(x\_i,\theta 1), y\_i\_j)$$

Calculating the criterion value S_i of datum x_i according to the latter formula is particularly advantageous since it does not require the determination of the second set Θ2 of weight values as well as the computation of the third dataset E3 loss for each datum x_i of the second dataset E2. Consequently, said second embodiment enables to account for scenarios with extreme constraints on computational costs.

An example is now described to illustrate how data selection in the dataset E2 works. This example relates more specifically to an example of binary classification in which the formula for calculating the criterion value S_i according to said second embodiment is used.

According to that example, one assumes the input to the neural network to be a feature vector $\Phi(x)$ extracted from a data x with a fixed (non-trainable) feature extractor $\Phi$. The function being learned is $F(x,\Theta) = \Theta^T\Phi(x)$, where "T" stands for the transpose operator. By defining $z = F(x,\Theta)$, and the function L being the cross-entropy loss:

$$L(z,y) = -y\log\big(\sigma(z)\big) - (1-y)\log(1-\sigma(z))$$

where y belongs to {0,1} and is the binary label, and:

$$\sigma(z) = \frac{1}{1+e^{-z}}$$

Hence, all calculations done, the criterion value S_i according to said second embodiment may still be written as follows:

$$S\_i(x\_i) = -\sum_{k} \alpha\, F(x\_i)F(x\_k)$$

where $\alpha = (\sigma(z\_i) - y\_i\_j) \times (\sigma(z\_k) - y\_k)$, x_k is a data belonging to said third dataset E3 and y_k is a label associated to said data x_k, $\sigma(z\_i) = F(x\_i,\Theta)$ and $\sigma(z\_k) = F(x\_k,\Theta)$.

Let's now assume that x_i and x_k are two data close in the feature space with $\Phi(x\_i).\Phi(x\_j) > 0$. Then, two different cases can be considered:

- case 1: $y\_i\_j \neq y\_k$ and c < 0;
- case 2 : $y\_i\_j = y\_k$ and c > 0.

Consequently, if x_i is similar to some data belonging to dataset E3 and is predicted incorrectly (case 1), one has that S_i(x_i) is likely to be positive. On the contrary, if x_i is similar to some data belonging to dataset E3 and is predicted correctly (case 2), one has that S_i(x_i) is likely to be negative.

Therefore, datum x_i would tend to be selected in case 1 during the implementation of step F40, while not in case 2. It confirms that the selection method aims at selecting data of the second dataset E3 that differ from the data of the third dataset E3 firstly in their wrongly predicted label.

The only aspects described so far with regard to the invention are the selection system and the selection method. However, it should be noted that the invention is not limited to these aspects. Indeed, once said K data have been selected from dataset E2, they can be annotated and therefore used for neural network re-training in order to improve its performance. Thus, said K selected data can be used, in accordance with another aspect of the invention, by a training system configured to carry out processes aimed at re-training the neural network, by implementing a training method according to the invention.

For the sake of simplicity, and for the rest of the description, it is considered in a non-limiting way that said training system and said selection system 10 are the same entity. However, nothing excludes considering that the K selected data are first obtained by said selection system 10 and then transmitted to another system for re-training the neural network. In this case, said other system is equipped with communication means compatible with the communication means 5 equipping the selection system 10, and comprises an obtaining module controlling said communication means to obtain said K selected data.

As shown in Figure 2, the functional modules defined by the program PROG of said selection system 10 also comprise:

- an association module MOD_ASSO, configured to associate a label to each of the K data selected from the second dataset E2,
- an updating module MOD_UPDATE, configured to update the first dataset E1 by adding said K labelled data to said first dataset E1. The first updated dataset is noted E1_NEW.

According to the present embodiment, the previously described training module MOD_TRAIN is also configured to train the neural network using the dataset E1_NEW.

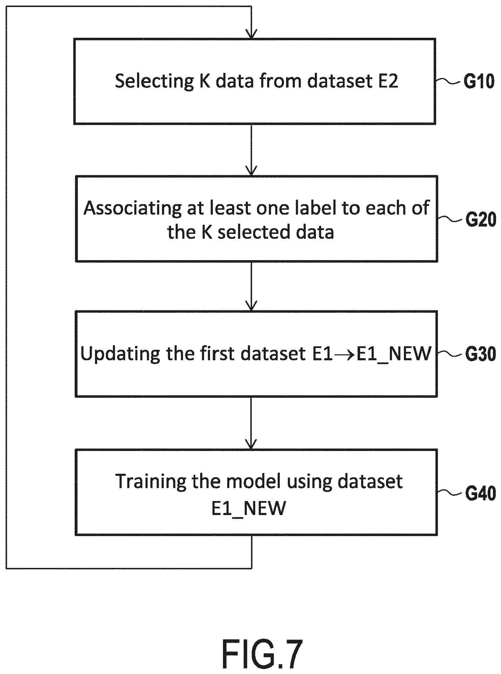

Figure 7 is a flowchart of a particular embodiment, carried out by the selection system 10, of the training method according to the invention.

As shown in Figure 7, the training method comprises a first step G10 of selecting said K data. The step G10 is performed by the selection system 10 according to the selection method described above.

The training method also comprises a step G20 of associating a label to each of the K data selected from the second dataset E2. This association step G20 is performed by the association module MOD_ASSO of the selection system 10.

It should be noted that the label associated to a datum among said K data is distinct from said label determined using the function F during implementation of step F20 (i.e. pseudo-label $y\_i\_j$ determined for datum $x\_i$) if said datum has been wrongly predicted (i.e. pseudo-label $y\_i\_j$ is not correct). In other words, said step G20 consists in annotating said K selected data so that the label assigned to them is now correct.

The training method also comprises a step G30 of updating the first dataset E1 by adding said K labelled data to said first dataset E1. This updating step G30 is performed by the updating module MOD_UPDATE of the selection system 10.

Thus, once the first updated dataset E1_NEW has been obtained, the training method comprises a step G40 of training the neural network using the first updated dataset E1_NEW. This training step G40 is performed by the training module MOD_TRAIN of the selection system 10.

As mentioned before, the number K considered during the implementation of said step G10 (i.e. more particularly of step F40 of the selection method) is less than or equal to the number of data contained in dataset E2. Therefore, nothing excludes considering a selection of other unlabelled data after step G40 in the case where K is strictly inferior to the cardinal number of dataset E2.

Thus, according to said particular embodiment, said selection G10, association G20, updating G30 and training G40 steps of said training method are iterated.

It is understood that iterations are carried out so that the training step G40 belonging to the training method corresponds to the training step F10 belonging to the selection method (step F10 being performed during the execution of step G10). Otherwise said, the first updated set E1_NEW following the implementation of a step G40 allows to obtain a new set of weight values 01_NEW, the following steps can then be carried out in their turn.

Different stopping criteria for these iterations can be considered. For example, iterations are carried out as long as a performance measure of the trained neural network remains below a given threshold. Such a performance measure may be, for example the mean of accuracy. However, no limitation is attached to the performance measure that can be considered, as the man skilled in the art is able to choose a performance measure adapted to the task associated with the neural network (classification, segmentation, etc.).

According to another example, iterations are carried out as long as data of the second dataset E2 remains unlabelled.

It should also be noted that the number K can differ in each iteration of said training method. The same is true for the third dataset E3.

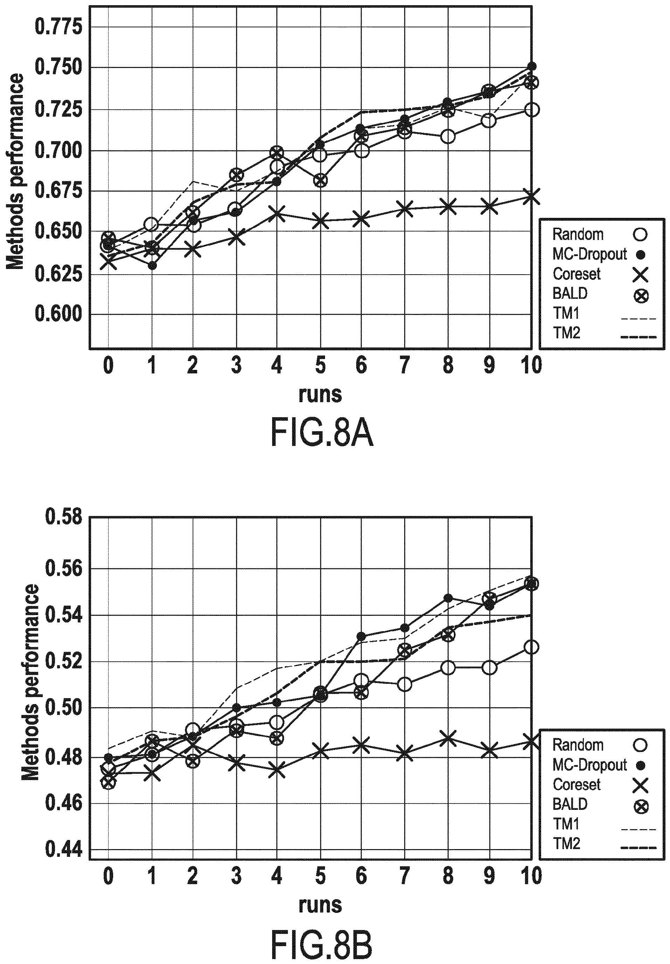

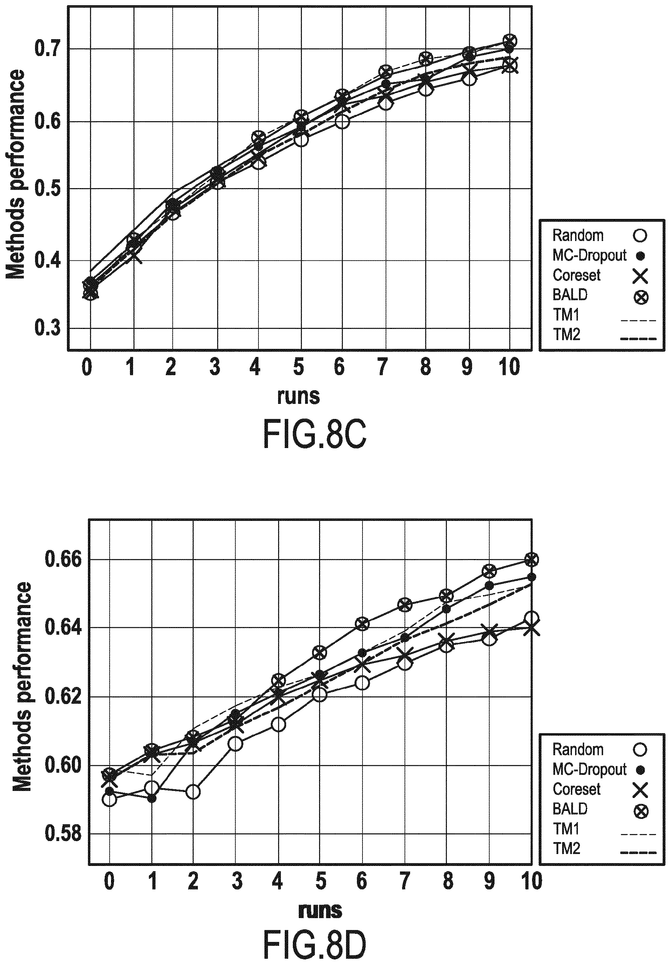

Figure 8 is a set of graphs illustrating performance results of a neural network trained according to the invention with balanced datasets for image classification.

More precisely, Figure 8 comprises four graphs (8a), (8b), (8c) and (8d). Each graph is a benchmark comparing, on a vertical axis, the performance results of the training method according to the invention with the performance results of other methods. The performance measure used here is the mean of accuracy. The horizontal axis, as for it, corresponds to the number of runs of said methods.

For each graph, one dedicated dataset is considered: MNIST dataset for graph (8a), KMNIST dataset for graph (8b), SVHN for graph (8c) and Cifar10 for graph (8d). Moreover, the methods other than the training method according to the invention which are considered for each of the graphs are:

- a method referred to as "Random" and consisting in selecting a random subset of the dataset E2 for annotation each time the method is implemented (curve with empty circles),
- the MC-Dropout method (see reference [1]) (curve with full circles),
- the Coreset method (see reference [2]) (curve with crosses),
- the BALD method (see reference [3]) (curve with crosses surrounded by circles).

As regards to the implementation, two-layer fully connected network is deployed for MNIST and KMNIST datasets, whereas ResNet18 is deployed for SVHN and Cifar10. All methods were trained using ADAM optimization algorithm with early stopping on the validation set. The neural network under consideration is not re-trained from scratch after each run, meaning that the training of the neural network under consideration is continued and only the optimizer parameters are reset.

Two curves are associated to the training method according to the invention:

- a first curve (fine dotted line) associated to said training method when the first particular embodiment is carried out (figure 5) and referred as "training method TM1" from now on,
- a second curve (thick dotted line) associated to said training method when the second particular embodiment is carried out (figure 6) and referred as "training method TM2" from now on.

The initial validation set is kept fixed during all the runs with a size equal to the size of the initial training dataset E1, and used as a holdout set (e.g. the third dataset E3) to estimate the criterion value determined in both first and second particular embodiments.

Moreover, the determination of the second set $\Theta2$ of weight values according to step F25 is performed with SGD (acronym for "Stochastic gradient descent") and limited to three iterations with learning rate equal to $10^{-3}$ on the fully connected model and equal to $10^{-4}$ on ResNet18. For each graph, methods are performed ten times.

Each active learning round is composed of 10 annotation steps 239 with each step being 10% of the initial training set size. The initial training set size is relative to each dataset difficulty (MNIST, KMNIST, SVHN, Cifar10) and the amount of data needed to obtain a reasonable initial performance. The following initial sizes 50, 100, 500, 5000 for respectively MNIST, KMNIST, SVHN and Cifar10 are used. Moreover, the number K is kept fixed and equal to 10% of the initial training set size

As shown in graphs (8a), (8b), (8c), (8d), the training method TM1, TM2 favourably compares to BALD and MC-Dropout methods, and is constantly better than Random and Coreset methods. However, the invention proposes a training method which is faster to compute comparing to the other methods, especially BALD and MC-Dropout methods, and which is also easy to implement.

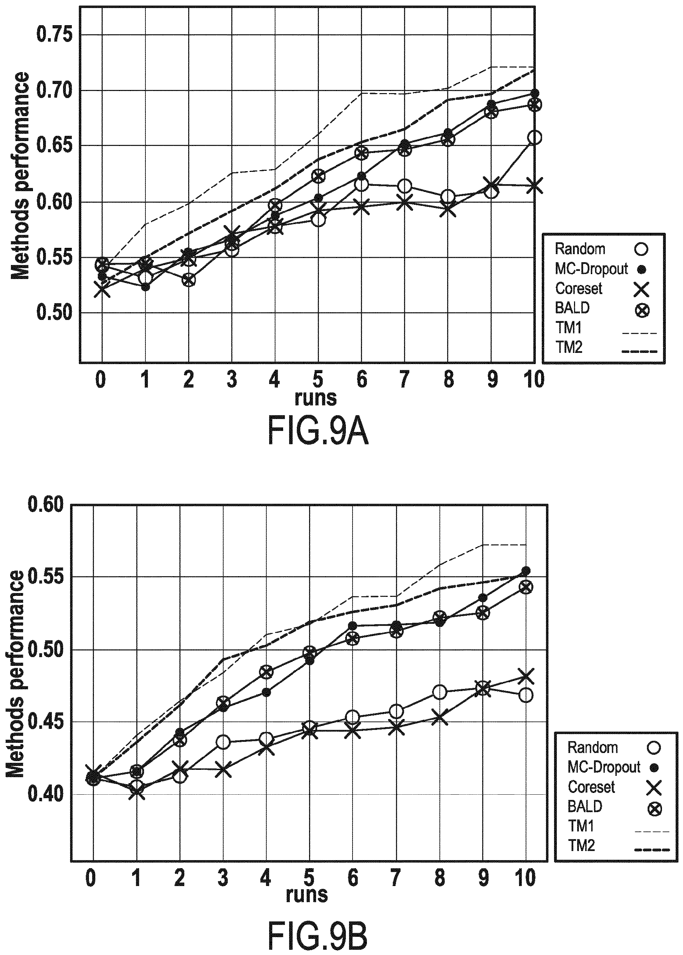

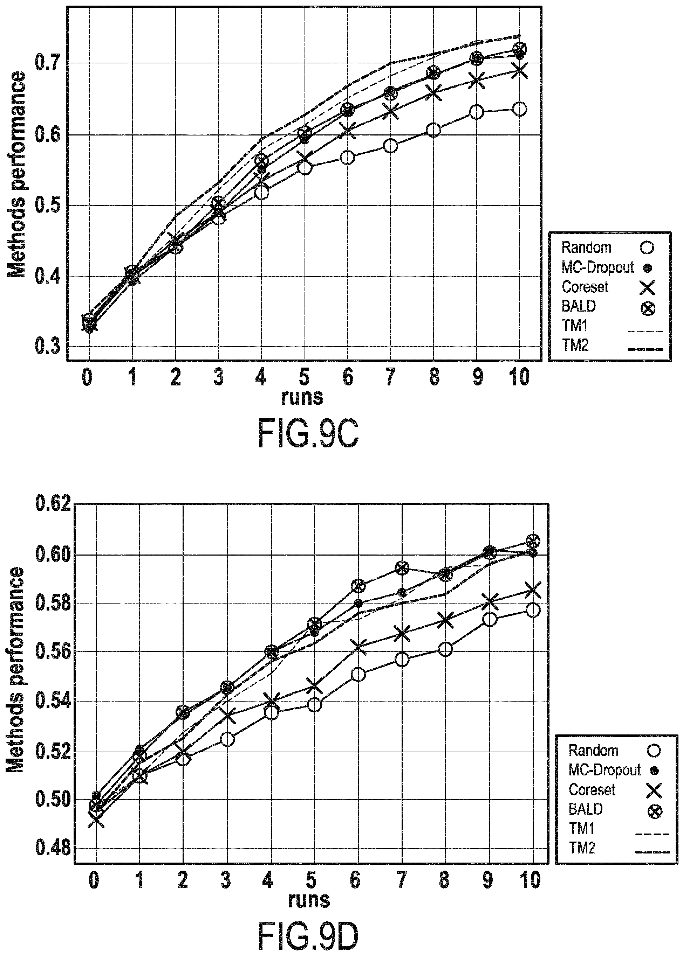

Figure 9 is a set of graphs illustrating performance results obtained by a neural network trained according to the invention with imbalanced datasets for image classification.

More precisely, Figure 9 comprises four graphs (9a), (9b), (9c) and (9d).

With the exception of the number of data per class in the different datasets, all the implementation details described with reference to Figure 8 are included here (MNIST, KMNIST, SVHN and Cifar10 are respectively associated with graphs (9a), (9b), (9c), (9d)).

In the standard balanced setting (Figure 8), Random method appears to be a competitive baseline and only outperformed by a small margin (2%-3%). However, random sampling cannot be taken for granted as a competitive method in the cases where there are dominant classes that are not of much importance to the task at hand as opposed to the under-represented ones. For example, in autonomous driving applications, most images contain examples of road, sky or buildings, but other categories like cyclists or trains are much less frequent.

Such a scenario is simulated in Figure 9 by constructing a dataset E2 in which half of the classes are under-represented with number of unlabelled data equal to 1/10 of other classes data (base number of data per class). Since the compared methods start with initial training dataset E1, the latter is also constructed with the same imbalanced setting. Regarding the validation set E3, it is kept balanced but with size limited to 1/5 of the initial training size. This setup is applied to the four studied datasets MNIST, KMNIST, SVHN and Cifar10.

As this is a much harder setting, the base class size of the initial training set is double for each dataset compared to the expected per category size in balanced setting (Figure 8). The number K is also double compared to one used for each method in balanced setting.

Graphs (9a), (9b), (9c), (9d) report the accuracy of each of the compared methods after each annotation step on the imbalanced datasets of MNIST, KMNIST, SVHN and Cifar10 respectively.

Larger differences may be observed between the different methods compared to balanced setting. More precisely, Random method fails to compete here. For example, with dataset MNIST (graph (9a)), the training method TM1 with only five runs achieves the same accuracy of Random after ten runs. This is a reduction of half of the annotation resources.

BALD and MC-Dropout methods, as for them, continue to improve over Random method with a larger margin in this setting. Coreset method has consistently lower performance than BALD and MC-Dropout methods.

Training methods TM1 and TM2 achieve the best performance on MNIST, KMNIST and SVHN settings with a substantial margin of 5%. Suc a significant improvement shows the invention ability to identify those underrepresented classes where most mistakes occur, and thereof selects most informative data contributing to higher gains in the trained model performance.

For Cifar10 dataset, all methods perform closely. This is mostly due to the low intra class similarity of this dataset that reduces the potential impact of the individual selected data.

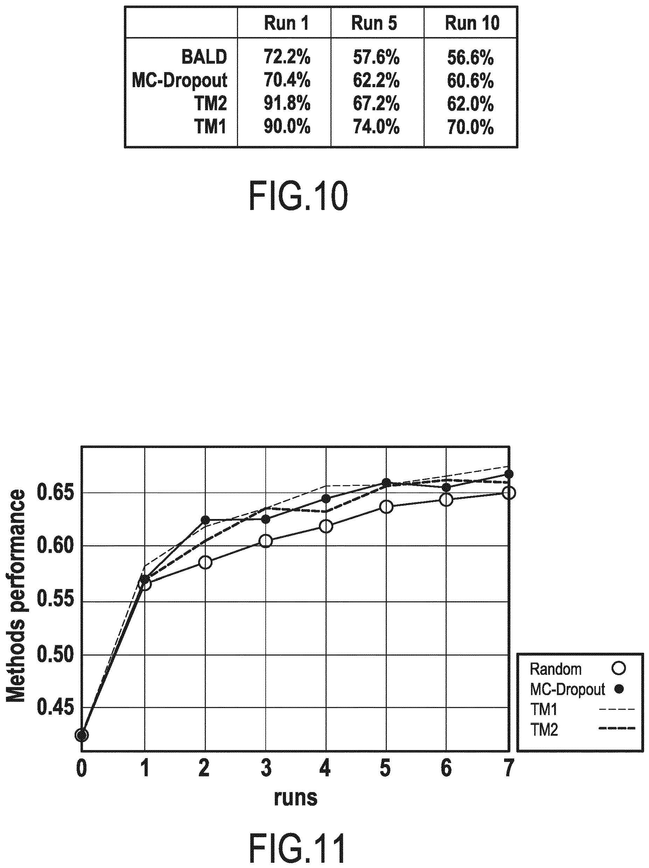

Figure 10 is a table reporting the accuracy of the selection method according to the invention.

More precisely, the percentage of data with wrong predictions (thus meaning that they have been incorrectly selected) is reported at different runs (run 1, 5 and 10) for MNIST dataset with balanced setting and considering several methods:

- training methods TM1 and TM2, and
- BALD and MC-Dropout methods.

It should be noted that BALD and MC-Dropout methods are here considered since they also aim at identifying among unlabelled data those for which a label is incorrectly predicted by the current trained neural network. Otherwise said, these methods rely on the same general purpose of training methods TM1 and TM2 according to the invention, even if the data selection is not implemented in the same way.

As shown in Table 1, training methods TM1 and TM2 are best at picking wrongly predicted samples, especially with method TM1 achieving a higher mistake selection rate after several runs. Hence, training methods TM1 and TM2 outperform the typical use of uncertainty and better identifies data that are likely to be wrongly predicted.

Figure 11 is a graph illustrating performance results of a neural network trained according to the invention for semantic segmentation.

The dataset considered in the example of Figure 8 is the Cityscapes dataset. Methods under consideration in this example are: training methods TM1 and TM2 according to the invention, Random method and MC-Dropout method. The performance measure used here is the mIoU (acronym for "mean Intersection over Union"). The size of the initial training dataset is equal to 248, and number K is kept fixed equal to 122.

It should be noted that considering semantic segmentation is equivalent to considering the case where each data may contribute to multiply and possibly conflicting hypotheses (i.e. the neural network may produce both correct and incorrect predictions for one data).

In order to adapt said training method TM1 to this framework, pixel predictions are averaged where:

$$L(F(E3,\Theta 2),LAB(E3)) > L(F(E3,\Theta 1),LAB(E3)).$$

By doing so, only the subset of a frame that indicates that the model has been negatively impacted by a data is considered.

As shown in Figure 11, training methods TM1, TM2 and MC-Dropout method performs closely, with training method TM1 having higher mIoU scores towards final runs. Random method, as for it, is outperformed all along.

References:

[1] "Dropout as a bayesian approximation: Representing model uncertainty in deep learning", Y. Gal, Z. Ghahramani, In international conference on machine learning, pages 1050-1059, 351 2016.

[2] "Active learning for convolutional neural networks: A core-set approach", O. Sener, S. Savarese, arXiv: 1708.00489, 2017.

[3] "Deep bayesian active learning with image 353 data", Y. Gal, R. Islam, Z. Ghahramani, In Proceedings of the 34th International Conference on Machine Learning-Volume 70, 354 pages 1183-1192. JMLR. org, 2017.

**Claims**

**1.** A method for selecting data to train a model, said model being parameterized by weights and represented by a classification function F mapping at least one datum to at least one class, said method comprising the steps of:

- training (F10) the model using a first dataset (E1) comprising class labelled data, so as to obtain a first set of weight values (01) optimising a function L evaluating the performance of the function F,
and, for each datum ($x\_i$) of a second dataset (E2) comprising unlabelled data,
- determining (F20) at least one pseudo-label ($y\_i\_j$) of said datum using said function F parameterized by said first set of weight values,
- determining (F30), using said function L and said first set of weight values, a value ($S\_i$) referred to as "criterion value" evaluating, for a third dataset (E3) distinct from said first and second datasets and comprising labelled data, a classification error estimated on the third dataset when said at least one pseudo-label determined for said datum of the second dataset is assumed to be true,
said method further comprising a step of selecting (F40), from said second dataset, a given number K of data whose respectively associated criterion values satisfy a given selection condition.

2. The method according to claim 1, said method further comprising, for each datum ($x\_i$) of the second dataset, a step of determining (F25) a second set ($\Theta2$) of weight values optimizing the function L parameterized by said datum and said at least one pseudo-label ($y\_i\_j$) determined for said datum, the criterion value ($S\_i$) being equal to the difference between:

- a first term being equal to the function L parameterized by the first set of weight values and evaluated on the third dataset (E3), and
- a second term being equal to the function L parameterized by the second set of weight values and evaluated on the third dataset,
the selection condition being satisfied if the criterion values of the K selected data are the largest among the criterion values of the data belonging to said second dataset (E2).

3. The method according to claim 1, wherein the criterion value ($S\_i$) is equal to the negative scalar product between:

- a first term being equal to the gradient with respect to the model weights of the function L evaluated on said third dataset (E3), said gradient being evaluated on said first set of weight values,
- a second term being equal to the gradient with respect to the model weights of the function L evaluated on said datum ($x\_i$) of the second dataset (E2) and said at least one pseudo-label ($y\_i\_j$) determined for said datum, said gradient being evaluated on said first set of weight values,
the selection condition being satisfied if the criterion values of said K selected data are the largest among the criterion values of the data belonging to said second dataset.

4. The method according to any one of claims 1 to 3, wherein each datum of said second dataset (E2) is associated with a class, a plurality of classes being considered and at least two of said classes being of distinct cardinal numbers.

5. The method according to any one of claims 1 to 4, wherein the classification function F is used for a classification task or a segmentation task.

6. A method for training a model parameterized by weights and represented by a classification function F mapping at least one datum to at least one class, said method comprising the steps of:

- selecting (G10) data according to any one of claims 1 to 5,
- associating (G20) at least one label to each of the K data selected from the second dataset (E2),
- updating (G30) the first dataset (E1) by adding said K labelled data to said first dataset,
- training (G40) the model using the first updated dataset (E1_NEW).

7. The method according to claim 6, wherein said selection (G10), association (G20), updating (G30) and training (G40) steps of said training method are iterated.

8. A method according to claim 7, wherein iterations are carried out as long as a performance measure of the trained model remains below a given threshold or as long as data of the second dataset (E2) remains unlabelled.

9. A computer program including instructions for executing the selection method according to any one of claims 1 to 5 or a training method according to any one of claims 6 to 8 when said program is executed by a computer.

**10.** A recording medium readable by a computer and having recorded thereon a computer program according to claim 9.

**11.** A system for selecting data to train a model, said model being parameterized by weights and represented by a classification function F mapping at least one datum to at least one class, said selection system comprising:

- a training module (MOD_TRAIN), configured to train the model using a first dataset (E1) comprising class labelled data, so as to obtain a first set of weight values (01) optimising a function L evaluating the performance of the function F,
- a first determination module (MOD_DET_1), configured to determine, for each datum ($x_i$) of a second dataset (E2) comprising unlabelled data, at least one pseudo-label ($y\_i\_j$) of said datum using said function F parameterized by said first set of weight values,
- a second determination module (MOD_DET_2), configured to determine, for each datum of the second dataset and using said function L and said first set of weight values, a value ($S_i$) referred to as "criterion value" evaluating, for a third dataset (E3) distinct from said first and second datasets and comprising labelled data, a classification error estimated on the third dataset when said at least one pseudo-label determined for said datum of the second dataset is assumed to be true,
- a selection module (MOD_SELECT), configured to select, from said second dataset, a given number K of data whose respectively associated criterion values satisfy a given selection condition.

**12.** A system for training a model, said model being parameterized by weights and represented by a classification function F mapping at least one label to at least one datum, said training system comprising:

- a selection system according to claim 11,
- an association module (MOD_ASSO), configured to associate at least one label to each of the K data selected from the second dataset (E2),
- an updating module (MOD_UPDATE), configured to update the first dataset (E1) by adding said K labelled data to said first dataset,
- a training module (MOD_TRAIN), configured to train the model using the first updated dataset (E1_NEW).

10

MOD_TRAIN

MOD_DET_1

MOD_DET_2

MOD_ASSO

MOD_SELECT

## FIG.1

10

| 3 |
| PROG |

| 5 | | 1 | |

| 4 | | 2 |

## FIG.2

FIG.3A

FIG.3B

FIG.3C

FIG.3D

Training a model using dataset E1 — F10

Determining at least one pseudo-label $y\_i\_j$ of a data $x\_i \in E2$ — F20

$x\_i$, i++

Determining a criterion value $S\_i$ of the data $x\_i$ with dataset E3 — F30

Selecting K data from dataset E2 — F40

# FIG.4

Training a model using dataset E1 — F10

Determining at least one pseudo-label $y\_i\_j$ of a data $x\_i \in E2$ — F20

$x\_i$, i++

Determining a set $\Theta2$ of weight values — F25

Determining a criterion value $S\_i$ of the data $x\_i$ with dataset E3 — F30

Selecting K data from dataset E2 — F40

FIG.5

Training a model using dataset E1 — F10

Determining at least one pseudo label
y_i_j of a data x_i∈ E2 — F20

x_i i++

Determining a criterion value S_i of the
data x_i with dataset E3,S_i being
calculated based on the scalar product
between two gradients — F30

Selecting K data from dataset E2 — F40

FIG.6

Selecting K data from dataset E2 — G10

Associating at least one label to each of the K selected data — G20

Updating the first dataset E1→E1_NEW — G30

Training the model using dataset E1_NEW — G40

# FIG.7

FIG.8A

FIG.8B

FIG.8C

FIG.8D

FIG.9A

FIG.9B

FIG.9C

FIG.9D

|  | Run 1 | Run 5 | Run 10 |
|---|---|---|---|
| BALD | 72.2% | 57.6% | 56.6% |
| MC-Dropout | 70.4% | 62.2% | 60.6% |
| TM2 | 91.8% | 67.2% | 62.0% |
| TM1 | 90.0% | 74.0% | 70.0% |

## FIG.10

## FIG.11

Europäisches
Patentamt

European
Patent Office

Office européen
des brevets

# EUROPEAN SEARCH REPORT

Application Number

EP 20 19 8215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HIEU PHAM ET AL: "Meta Pseudo Labels", ARXIV.ORG, CORNELL UNIVERSITY LIBRARY, 201 OLIN LIBRARY CORNELL UNIVERSITY ITHACA, NY 14853, 24 March 2020 (2020-03-24), XP081650005, * sections 1-3; figure 2 * * abstract * | 1-12 | INV. G06N3/08 |
| X | YU LEI ET AL: "Accuracy Improvement for Fine-Grained Image Classification with Semi-Supervised Learning", 2019 ASIA COMMUNICATIONS AND PHOTONICS CONFERENCE (ACP), OSA, 2 November 2019 (2019-11-02), pages 1-3, XP033709498, [retrieved on 2020-02-07] * sections 1, 2 * | 1,2,4-12 | |

TECHNICAL FIELDS
SEARCHED      (IPC)

G06N

The present search report has been drawn up for all claims

| Place of search | Date of completion of the search | Examiner |
|---|---|---|
| Munich | 19 April 2021 | Cordara, Giovanni |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. GAL ; Z. GHAHRAMANI.** Dropout as a Bayesian approximation: Representing model uncertainty in deep learning. *international conference on machine learning,* 2016, 1050-1059
- **Y. GAL ; Z. GHAHRAMANI.** Dropout as a bayesian approximation: Representing model uncertainty in deep learning. *In international conference on machine learning,* 2016, vol. 351, 1050-1059
- **O. SENER ; S. SAVARESE.** *Active learning for convolutional neural networks: A core-set approach,* 2017
- **Y. GAL ; R. ISLAM ; Z. GHAHRAMANI.** Deep bayesian active learning with image 353 data. *In Proceedings of the 34th International Conference on Machine Learning-Volume 70, 354 pages 1183-1192. JMLR. org,* 2017, vol. 70 (354), 1183-1192